(19) **Europäisches Patentamt / European Patent Office / Office européen des brevets**

(11) **EP 4 641 689 A1**

(12) # EUROPEAN PATENT APPLICATION

(43) Date of publication:
**29.10.2025 Bulletin 2025/44**

(21) Application number: **25167976.7**

(22) Date of filing: **02.04.2025**

(51) International Patent Classification (IPC):
**H01M 4/58** (2010.01)   **H01M 4/525** (2010.01)
**H01M 4/505** (2010.01)   **H01M 4/136** (2010.01)
**H01M 4/62** (2006.01)

(52) Cooperative Patent Classification (CPC):
**H01M 4/505; H01M 4/136; H01M 4/525;
H01M 4/5825; H01M 4/625;** H01M 10/0525;
H01M 2004/021; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024 KR 20240053572**

(71) Applicant: **SAMSUNG SDI CO., LTD.**
**Yongin-si, Gyeonggi-do 17084 (KR)**

(72) Inventors:
• **Kim, Young-Ki**
**17084 Yongin-si (KR)**
• **Choi, Aram**
**17084 Yongin-si (KR)**
• **Kim, Sangmi**
**17084 Yongin-si (KR)**
• **Doo, Sungwook**
**17084 Yongin-si (KR)**
• **Kang, Gwiwoon**
**17084 Yongin-si (KR)**
• **Lee, Soonrewl**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE CONTAINING THE SAME, AND RECHARGEABLE LITHIUM BATTERY INCLUDING THE SAME**

(57)   A positive electrode active material for a rechargeable lithium battery, a positive electrode containing the same, and a rechargeable lithium battery including the same are disclosed. A positive electrode active material includes a first particle containing a compound represented by Formula 1 and having a first average particle diameter:

$$\text{Formula 1} \qquad Li_aFe_xMn_yTi_zPO_{4-b}$$

where, in Formula 1, $0.8 \leq a \leq 1.2$, $0.79 \leq x \leq 0.9$, $0.1 \leq y \leq 0.2$, $0.001 \leq z \leq 0.05$, $0 \leq b \leq 0.05$, and $0.99 \leq x + y + z \leq 1.01$.

**EP 4 641 689 A1**

**(Cont. next page)**

# FIG. 6

AML1

PTC1

CDM

BND

**Description**

**BACKGROUND**

**(a) Field**

The present disclosure herein relates to a positive electrode active material for a rechargeable lithium battery, a positive electrode containing the positive electrode active material, and a rechargeable lithium battery including the positive electrode.

**(b) Description of the Related Art**

Recently, with the rapid spread of battery-using (e.g., battery-operated) electronic devices, such as mobile phones, laptop computers, and/or electric vehicles, the demand or desire for rechargeable batteries with relatively high energy density and high capacity has significantly increased. Accordingly, extensive research and development efforts have been directed (actively conducted) towards enhancing (improving) the performance of rechargeable batteries, such as rechargeable lithium batteries.

A rechargeable lithium battery includes a positive electrode and a negative electrode (each containing an active material capable of intercalation and deintercalation of lithium ions), and an electrolyte solution. Electrical energy is produced by oxidation and reduction reactions when the lithium ions are intercalated into and deintercalated from the positive electrode and the negative electrode.

**SUMMARY**

An aspect according to one or more embodiments of the present disclosure is directed toward a positive electrode active material with (having) high energy density, high operating voltage, and high conductivity.

An aspect according to one or more embodiments of the present disclosure is directed toward a rechargeable lithium battery with (having) high energy density, high operating voltage, and enhanced (improved) low-temperature characteristics.

Additional aspects will be set forth in part in the description which follows and, in part, will be apparent from the description, or may be learned by practice of the presented embodiments of the disclosure.

According to one or more embodiments of the present disclosure, a positive electrode active material includes a first particle containing a compound represented by Formula 1, and having a first average particle diameter. Formula 1

$$Li_aFe_xMn_yTi_zPO_{4-b}$$

In Formula 1, $0.8 \leq a \leq 1.2$, $0.79 \leq x \leq 0.9$, $0.1 \leq y \leq 0.2$, $0.001 \leq z \leq 0.05$, $0 \leq b \leq 0.05$, and $0.99 \leq x + y + z \leq 1.01$.

According to one or more embodiments of the disclosure, a positive electrode for a rechargeable lithium battery includes a positive electrode current collector, and a positive electrode active material layer on the positive electrode current collector, and the positive electrode active material layer includes the above-described positive electrode active material, a conductive material, and a binder.

According to one or more embodiments of the disclosure, a rechargeable lithium battery may include a positive electrode, a negative electrode, a separator, and an electrolyte solution, and the positive electrode may include the above-described positive electrode active material.

**BRIEF DESCRIPTION OF THE DRAWINGS**

The accompanying drawings are included to provide a further understanding of the disclosure, and are incorporated in and constitute a part of this specification. The drawings illustrate embodiments of the disclosure and, together with the description, serve to explain principles of the disclosure. In the drawings:

FIG. 1 is a simplified conceptual diagram illustrating a rechargeable lithium battery according to one or more embodiments of the disclosure;
FIG. 2 is a schematic illustration of a cylindrical battery according to one or more embodiments of the disclosure;
FIG. 3 is a schematic illustration of a prismatic battery according to one or more embodiments of the disclosure;
FIG. 4 is a schematic illustration of a pouch-type or kind battery according to one or more embodiments of the disclosure;
FIG. 5 is a schematic illustration of a pouch-type or kind battery according to one or more embodiments of the disclosure;

FIG. 6 is a schematic illustration of a positive electrode active material layer of a rechargeable lithium battery according to one or more embodiments of the disclosure;

FIG. 7 is a schematic illustration of a positive electrode active material layer of a rechargeable lithium battery according to one or more embodiments of the disclosure;

FIG. 8 is a flowchart illustrating a preparation method of a positive electrode active material according to one or more embodiments of the disclosure;

FIG. 9 shows scanning electron microscope (SEM) images of a positive electrode active material according to one or more embodiments of the disclosure; and

FIG. 10 shows scanning electron microscope (SEM) images of a positive electrode active material according to one or more embodiments of the disclosure.

## DETAILED DESCRIPTION

In order to fully understand the configuration and effect of the present disclosure, embodiments of the present disclosure will be described in more detail with reference to the accompanying drawings. The present disclosure may, however, be embodied in one or more suitable forms and one or more suitable changes and modifications can be made, and should not be construed as limited to one or more embodiments set forth herein. Rather, these embodiments are provided so that this disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element or intervening elements may be present therebetween. In contrast, if an element is referred to as being directly on another element, no intervening elements are present therebetween.

In the drawings, thicknesses of components may be exaggerated for clarity and to assist in explaining the technical contents. Like reference numerals and/or symbols refer to like elements throughout the specification, and duplicative descriptions thereof may not be provided.

The singular forms are intended to include the plural forms as well, unless the context clearly indicates otherwise. In addition, unless otherwise specially noted, the phrases "A or B" and "A and/or B" may indicate "A but not B", "B but not A", or "A and B". The terms "comprises/includes" and/or "comprising/including" used in this specification do not exclude the presence or addition of one or more other components.

In this specification, the term "combination thereof" may refer to a mixture, a stack, a composite, a copolymer, an alloy, a blend, and/or a reaction product of components.

Unless otherwise defined in this specification, a particle diameter may be an average particle diameter. Also, the particle diameter may refer to an average particle diameter (D50) which refers to a diameter of particles at a cumulative volume of about 50 vol% in a particle size distribution. The average particle diameter (D50) may be measured by any suitable method, for example, may be measured by a particle size analyzer, or may also be measured using a transmission electron microscope (TEM) image and/or a scanning electron microscope (SEM) image. In one or more embodiments, the average particle diameter is measured by a measuring device using dynamic light-scattering, where the number of particles is counted for each particle size range by performing data analysis, and an average particle diameter (D50) value may then be obtained by calculation therefrom. Also, the average particle diameter may be measured using a laser diffraction method. If (e.g., when) measured by the laser diffraction method, for example, after dispersing particles to be measured in a dispersion medium, the dispersion medium is introduced into a commercial laser diffraction particle size measurement instrument (e.g., Micro-Trak MT-3000™) and irradiated with ultrasonic waves of about 28 kHz at an output of about 60 W, and the average particle diameter (D50) based on about 50% of particle size distribution in the measurement instrument may then be calculated. In the present specification, if (e.g., when) particles are spherical, the term "diameter" or "size" indicates a particle diameter, and if (e.g., when) the particles are non-spherical, the term "diameter" or "size" indicates a major axis length.

It will be understood that, although the terms first, second, etc., may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", if (e.g., when) preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both

(e.g., simultaneously) a and c, both (e.g., simultaneously) b and c, all of a, b, and c, or variations thereof.

Further, the use of "may" if (e.g., when) describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. The term "about" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may refer to within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

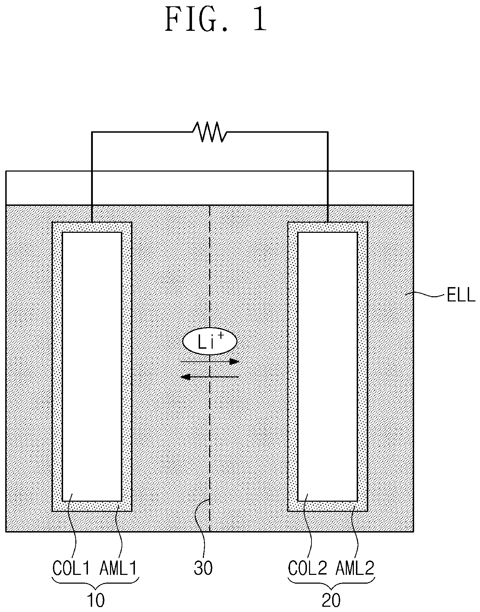

FIG. 1 is a simplified conceptual diagram showing a rechargeable lithium battery according to one or more embodiments of the disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

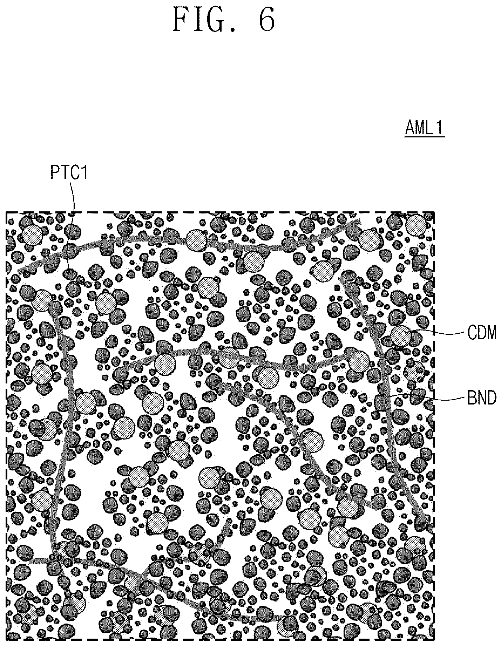

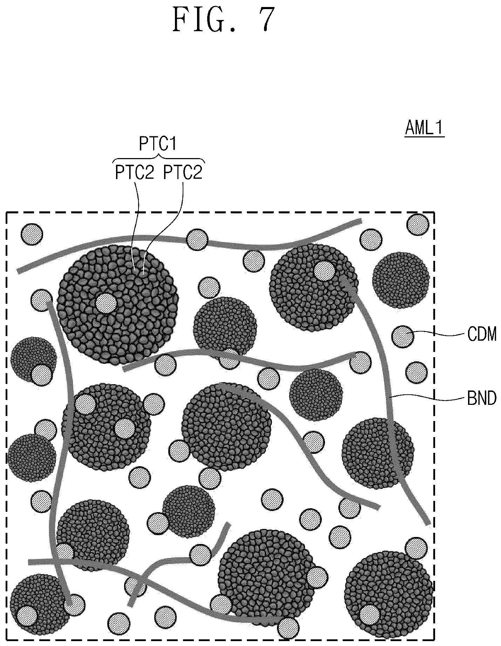

The positive electrode 10 for a rechargeable lithium battery includes a current collector COL1 and a positive electrode active material layer AML1 formed on the current collector COL1. The positive electrode active material layer AML1 includes a positive electrode active material and further includes a binder and a conductive material. The positive electrode active material layer AML1 according to one or more embodiments of the present disclosure will be described in more detail with reference to FIGS. 6 and 7. Aluminium (Al) may be used as the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g. an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material, each based on 100 wt% of the negative electrode active material layer AML2.

The binder may serve to attach the negative electrode active material particles well or suitably to each other and also to attach the negative electrode active material well or suitably to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resins, polyvinyl alcohol, and/or a (e.g., any suitable) combination thereof.

If (e.g., when) an aqueous binder is used as the negative electrode binder, a cellulose-based compound capable of imparting viscosity (e.g., adjusting the viscosity to a desirable range) may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous (e.g., capable of being formed into the shape of a fiber). For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g. electrical conductivity) to the electrode. Any material that does not cause chemical change (e.g. does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material may include a material that can reversibly intercalate/deintercalate lithium ions, a lithium metal, a lithium metal alloy, a material capable of doping/dedoping lithium, and/or a transition metal oxide.

The material that can reversibly intercalate/deintercalate lithium ions may include a carbon-based negative electrode active material, for example, crystalline carbon, amorphous carbon, and/or a (e.g., any suitable) combination thereof. The crystalline carbon may be graphite such as non-shaped (e.g., randomly shaped), sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0<x\leq2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0<y\leq2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled (agglomerated), and an amorphous carbon coating layer (shell) on the surface of the secondary particle. The amorphous carbon may also be between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film may be a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both (e.g., simultaneously) surfaces (e.g., opposite surfaces)) of the porous substrate.

The porous substrate may be a polymer film formed of any one selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON™), and/or may be a copolymer and/or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, Mg $(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between the positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are each integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable Lithium Battery**

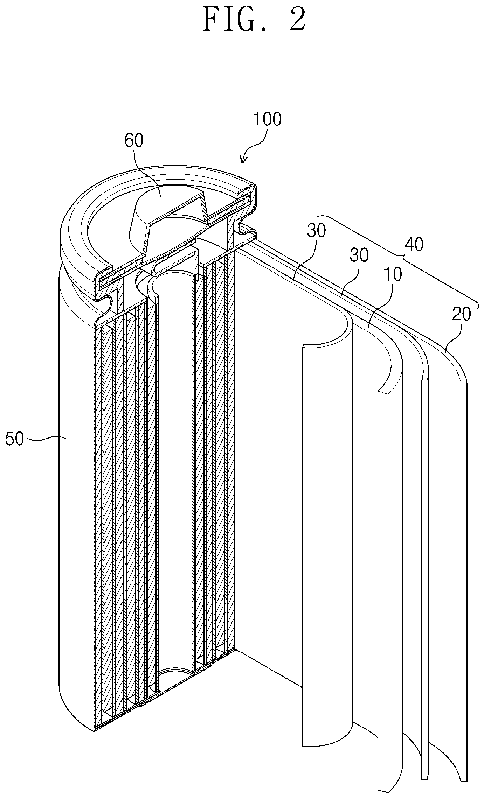

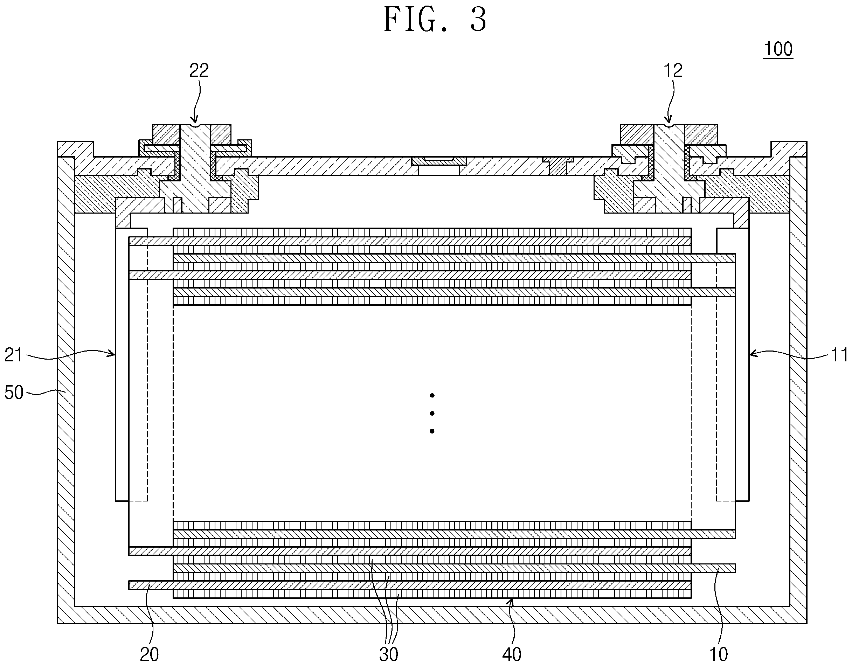

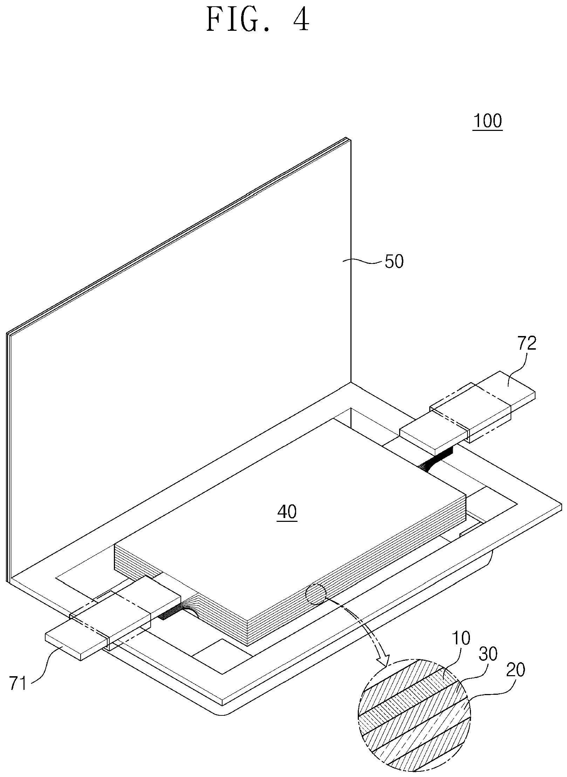

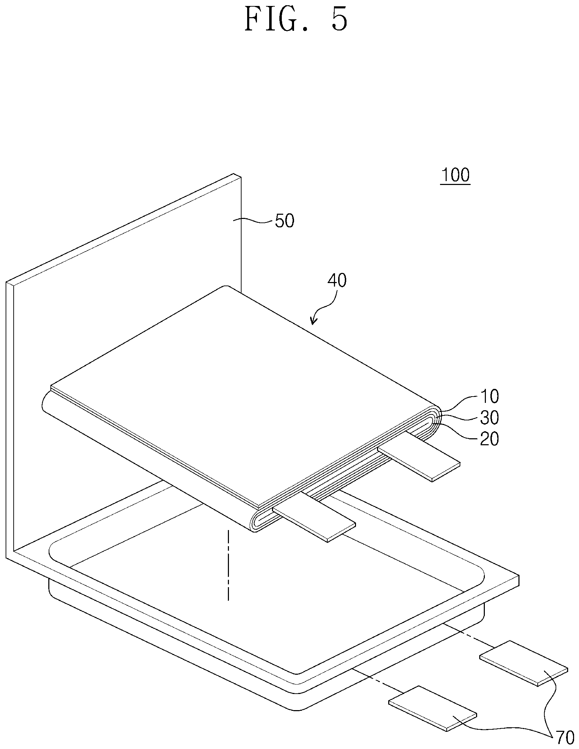

The rechargeable lithium battery may be classified into cylindrical, prismatic, pouch, or coin-type (kind) batteries, and/or the like depending on their shape. FIGS. 2 to 5 are schematic views illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIGS. 6 and 7 are each a schematic illustration (e.g., enlarged view) of a positive electrode active material layer of a rechargeable lithium battery according to one or more embodiments of the disclosure. Referring to FIGS. 6 and 7, the positive electrode active material layer AML1 includes a first particle PTC1, a conductive material CDM, and a binder BND. A plurality of first particles PTC1 constitute a positive electrode active material according to one or more embodiments of the disclosure.

The positive electrode active material layer AML1 may further include an additive that may serve as a sacrificial positive electrode.

An amount of the positive electrode active material (e.g., the plurality of first particles PTC1) in the positive electrode active material layer AML1 may be about 90 wt% to about 99 wt% with respect to 100 wt% of the positive electrode active material layer AML1. An amount of each of the binder BND and the conductive material CDM may be about 0.5 wt% to about 5 wt% with respect to 100 wt% of the positive electrode active material layer AML1.

The binder BND may bind the first particle PTC1, a second particle PTC2, and the conductive material CDM to each other. For example, the binder BND may include at least one selected from among (or selected from the group consisting of) polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth) acrylated styrene-butadiene rubber, an epoxy resin, a (meth)acrylic resin, a polyester resin, and nylon, but one or more embodiments of the disclosure is not limited thereto.

The conductive material CDM may be used to improve conductivity of the positive electrode active material layer AML1. Any suitable conductive material that does not cause chemical change of the positive electrode active material layer AML1 may be used, without limitation, as the conductive material CDM. Examples of the conductive material CDM may include a carbon-based material such as natural graphite, artificial graphite, carbon black, acetylene black, ketjen black, a carbon fiber, a carbon nanofiber, and/or carbon nanotube; a metal-based material containing copper, nickel, aluminium, silver, and/or the like, in a form of a metal powder or a metal fiber; a conductive polymer such as a polyphenylene derivative; and/or a (e.g., any suitable) mixture thereof.

Hereinafter, the first particle PTC1 will be described in more detail.

**First Particle PTC1**

The first particle PTC1 may include an olivine-based lithium compound represented by Formula 1.

Formula 1 $\quad\quad Li_aFe_xMn_yTi_zPO_{4-b}$

In Formula 1 above, $0.8 \leq a \leq 1.2$, $0.79 \leq x \leq 0.9$, $0.1 \leq y \leq 0.2$, $0.001 \leq z \leq 0.05$, $0 \leq b \leq 0.05$, and $0.99 \leq x + y + z \leq 1.01$ are satisfied. Mn and Ti may be dopants doped into the first particle PTC1. For example, y may be about 0.12 to about 0.18, and z may be about 0.003 to about 0.006. Doping with Ti may control the sizes of single particles or primary particles to be substantially uniform, thereby improving the charge-discharge efficiency, and low-temperature and lifespan characteristics of a rechargeable lithium battery. In addition, doping with Ti may stabilize the crystal structure of the positive electrode active material, thereby improving the lifespan characteristics of the battery. The primary particle (which may be aggregated with others to from a secondary particle) will be described in more detail as follows.

A lithium iron phosphate-based positive electrode active material (hereinafter, referred to as LFP) having an olivine crystal structure may have excellent or suitable lifespan characteristics compared with other positive electrode materials, but may have low energy density and deteriorated lifespan characteristics if (e.g., when) used at a high voltage.

A lithium manganese iron phosphate-based positive electrode active material (hereinafter, referred to as LMFP), in which some of Fe in LFP has been substituted with Mn, may have higher operating voltage and energy density than LFP, but manganese dissolution may occur, and the size of grain (or particle size) may be too small. In the case that a particle size is too small, processing of an electrode plate may be difficult due to low binding force between a current collector and the positive electrode active material, and a large amount of the binder may be desired or required in manufacture of the electrode plate.

For a comparable LMFP, the molar ratio of Mn to Fe (Mn/Fe) may be about 1 or greater, for example, about 1 to about 4. The positive electrode active material according to one or more embodiments of the disclosure may have a molar ratio (Mn/Fe) of about 0.1 to about 0.3, or about 0.15 to about 0.25. Because the positive electrode active material according to one or more embodiments of the disclosure contains smaller amount of Mn than the comparable LMFP, the size of grain thereof (or particle size) may become larger, and accordingly, the size of the primary particle may become larger. If (e.g., when) the amount of manganese falls within the above-described range, the manganese dissolution and the difficulty in the processing of the electrode plate may be prevented or reduced while high-voltage lifespan characteristics of the LFP positive electrode active material is improved.

In one or more embodiments, the first particle PTC1 may include a coating layer on a surface thereof. The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer.

The coating layer may further include at least one selected from among (or selected from the group consisting of) a titanium-containing compound, a magnesium-containing compound, and a vanadium-containing compound. A metal-containing compound, such as the titanium-containing compound, the magnesium-containing compound, and/or the vanadium-containing compound, may be, for example, a metal oxide, a metal hydroxide, a metal carbonate, or a composite or mixture thereof. The metal-containing compound may further include another metal or non-metal element. For example, the metal-containing compound may further include lithium.

The first particle PTC1 may further include carbon derived from the above-described coating layer and/or a grain boundary coating layer (or coating layer on surfaces of primary particles). An amount of carbon element in the first particle PTC1 may be about 0.5 wt% to about 10 wt%, about 1 wt% to about 3 wt%, or about 1.5 wt% to about 2.5 wt%, based on a total 100 wt% of the first particle PTC1.

Because the positive electrode active material according to one or more embodiments of the disclosure includes the first particle PTC1, mixture density, capacity, and energy density may be improved. In one or more embodiments, the pellet density of the positive electrode active material may be about 2.0 g/cc to about 2.5 g/cc, or about 2.3 g/cc to about 2.5 g/cc.

The first particle PTC1 has a first average particle diameter. The first average particle diameter may vary according to the embodiments illustrated in FIG. 6 or FIG. 7. As used herein, unless otherwise defined, a diameter or size (e.g., an average particle diameter (D50)) refers to a diameter of particles having a cumulative volume of 50% by volume in the particle size distribution. The average particle size D50 may be measured by a suitable technique, e.g., using a particle size analyzer, transmission electron microscope photography, and/or scanning electron microscope photography. Another method may be performed by using a measuring device with dynamic light scattering, analyzing data to count a number of particles relative to each particle size, and then calculating to obtain an average particle diameter D50. Also, if (e.g., when) particles are spherical, "diameter" or "size" indicates a spherical particle diameter or an average particle diameter, and if (e.g., when) the particles are non-spherical, the "diameter" or "size" indicates a major axis length or an average major axis length.

In one or more embodiments, referring to FIG. 6, the first particle PTC1 may have a single particle form. In this specification, the term "single particle" may refer to one particle that exists alone without a grain boundary or interface therein. In terms of morphology, the single particle may refer to one particle, a monolith structure, a single unitary structure, or a non-aggregated (e.g., agglomerated) particle, existing as an independent phase in which particles do not aggregate with each other. For example, the single particle may be a single crystal. Alternatively, the single particle may be a particle containing two or more (e.g., a few) crystals. That is, the single particle may have a single crystal or a polycrystalline structure. The single particle may be independently separated, e.g., may not be agglomerated with another particle. In one or more embodiments, the first particle PTC1 may have a form of a cluster of about 2 to about 100 single particles bound (attached) to each other. Unlike the secondary particles to be discussed in more detail below, such a cluster of particles does not have a spherical or oval shape and is irregularly shaped with the particles randomly grouped together.

The first particle PTC1 may be a nano-sized or larger positive electrode active material, and the first particle PTC1 may include at least one primary particle. The first particle PTC1 may exist as only one primary particle (e.g., in the form of a single particle), or may have a spherical shape in which primary particles are aggregated (e.g., agglomerated) (e.g., in the form of a secondary particle), or may have a random shape in which the primary particles are aggregated (e.g., attached) (e.g., as a cluster of primary particles). Here, the primary particles refer to the individual particles that aggregated (e.g., agglomerated) together to form the secondary particles, or the single particle if (e.g., when) the first particle PTC1 exists in the form of a non-aggregated single particle.

For example, the first particle PTC1 may be provided in one or more suitable sizes. For example, the first particle PTC1 may have an average particle diameter of about 500 nm (0.5 $\mu$m) to about 2.5 $\mu$m, for example, about 1 $\mu$m. A minimum (or smallest) particle diameter of the first particle PTC1, which is the size of the primary particle, may be about 100 nm to about 500 nm, about 150 nm to about 300 nm, or about 200 nm to about 300 nm.

In one or more embodiments, the average particle diameter may be measured with a particle size analyzer. The average particle diameter may refer to a diameter (D50) of particles at a cumulative volume of about 50 vol% in a particle size distribution.

In one or more embodiments, the minimum (or smallest) particle diameter, which is the size of the primary particle, may refer to a value obtained by measuring diameters of about 30 primary particles randomly selected from an electron micrograph of the first particle PTC1.

If (e.g., when) the first particle PTC1 is a single particle, the first average particle diameter is small (e.g., extremely small), and thus a large amount of the binder BND may be desired or required to bind the first particle PTC1 to the current collector COL1 (see FIG. 1). For example, the amount of the binder BND may be about 2 wt% to about 5 wt% with respect to 100 wt% of the positive electrode active material layer AML1.

In one or more embodiments, referring to FIG. 7, the first particle PTC1 may be in a form of an agglomeration of multiple primary particles (and/or may be a polycrystal), and may include (be in the form of) a secondary particle in which at least two primary particles are aggregated (e.g., agglomerated). For example, one first particle PTC1 may include a plurality of second particles PTC2 that are aggregated (e.g., agglomerated) with each other. The second particles PTC2 may each be a primary particle. The first particle PTC1 may have a spherical or oval shape.

In one or more embodiments, the first particle PTC1 may further include a grain boundary coating layer on surfaces of the second particles PTC2. The grain boundary coating layer may be present inside the first particle PTC1. The grain boundary coating layer may be formed along an interface between the second particles PTC2 inside the first particle PTC1. For example, the grain boundary coating layer may refer to a material applied to the grain boundary (or interface between adjacent primary particles) inside the first particle PTC1. For example, the primary particles may have the grain boundary coating layer formed on a surface thereof, and accordingly, the grain boundary coating layer is present at an interface between adjacent primary particles inside the first particle PTC1. The grain boundary coating layer may include carbon and/or a carbon-containing compound. The grain boundary coating layer may further include at least one selected from among (or selected from the group consisting of) a titanium-containing compound, a manganese-containing compound, and a vanadium-containing compound.

The inside of the first particle PTC1 may refer to an entire inner region of the first particle PTC1 excluding the surface of the first particle PTC1. For example, the inside of the first particle PTC1 may refer to an entire inner region from about 10 nm depth from the outer surface (e.g., outermost surface) of the first particle PTC1, or a region from about 10 nm depth to about 2 $\mu$m depth. For example, the inside of the first particle PTC1 may refer to an entire remaining region of the first particle PTC1 after excluding the region from the outer surface to about 10 nm depth from the outer surface of the first particle PTC1, or a region from about 10 nm depth to about 2 $\mu$m depth from the outer surface of the first particle PTC1.

Because the first particle PTC1 may further include a grain boundary coating layer, structural stability may be strengthened, and a coating layer may be formed uniformly (e.g., substantially uniformly) on the surface of the first particle PTC1. In addition, because the first particle PTC1 may further include the grain boundary coating layer, the electrical conductivity of the first particle PTC1 may be further improved.

If (e.g., when) the first particle PTC1 is a secondary particle, the average particle diameter of the first particle PTC1 may be about 2 $\mu$m to about 15 $\mu$m, about 3 $\mu$m to about 10 $\mu$m, or about 3 $\mu$m to about 7 $\mu$m. For example, the average particle diameter of the first particle PTC1 may be about 5 $\mu$m. The average particle diameter of the first particle PTC1 may be larger than an average size of the second particle PTC2 to be described in more detail later. In one or more embodiments, the average particle diameter may be measured with a particle size analyzer. The average particle diameter may refer to a diameter (D50) of particles at a cumulative volume of about 50 vol% in a particle size distribution.

The average size of the second particle PTC2 may be about 200 nm or less. For example, the average size of the second particle PTC2 may be about 10 nm to about 200 nm, about 20 nm to about 200 nm, about 50 nm to about 200 nm, or about 100 nm to about 200 nm. In one or more embodiments, the average size of the second particle PTC2 may refer to a value obtained by measuring diameters of about 30 primary particles randomly selected from an electron micrograph of a positive electrode active material. The second particles PTC2 may have a substantially uniform size.

The first particle PTC1 may have a spherical shape in which the nano-sized second particles PTC2 are aggregated (e.g., agglomerated). With the second particles PTC2 being closely aggregated (e.g., agglomerated) with each other, the first particle PTC1 may have the following characteristics. The first particle PTC1 may have the shape of a sphere or have an oval shape. The average particle diameter (D50) of the first particle PTC1 may be about 2 $\mu$m to about 15 $\mu$m (e.g., 3 $\mu$m to about 10 $\mu$m). The first particle PTC1 may have a porosity of about 20% to about 40%. Here, porosity (n) may be defined as the pore volume (Vp) divided by the total volume (Vt) of particles, or

$$n = \frac{V_p}{V_t}.$$

The span value, obtained by analysis on the first particle PTC1 with a particle size analyzer, may be about 0.3 to about 0.75. Here, the span value represents the uniformity of particle sizes and is calculated by dividing a difference between D90 and D10 by D50 (i.e., (D90-D10)/D50), in which D10, D50 and D90 represent the size of particles at a cumulative volume of about 10 vol%, 50 vol% and 90 vol% in a particle size distribution, respectively.

If (e.g., when) the first particle PTC1 is a secondary particle, because the first average particle diameter is large, relatively small amount of the binder BND may be desired or required to bind the first particle to the current collector COL1 (see FIG. 1). For example, the amount of the binder BND may be about 0.5 wt% to about 2 wt% with respect to 100 wt% of the positive electrode active material layer AML1. If (e.g., when) the amount of the binder included in the positive electrode active material layer AML1 is reduced, the amount of the active material may be increased accordingly, thereby improving capacity and energy density of a battery. In addition, by reducing the amount of the binder, which increases resistance, electrical conductivity of the positive electrode may be improved.

In the context of the present application and unless otherwise defined, a single particle form refers to an individual particle that exists independently without any grain boundaries or interfaces within it. This may include a single crystal or a polycrystalline structure, where the particle is a monolithic unit and does not aggregate with other particles. In contrast, a secondary particle form is an aggregate of multiple primary particles. These primary particles, each typically ranging from about 100 nm to about 500 nm (e.g. 100 nm to 200 nm), come together to form a larger composite particle, often spherical or oval in shape, with an average diameter ranging from about 2 $\mu$m to about 15 $\mu$m. The secondary particle's structure includes interfaces between the aggregated primary particles, and it generally requires less binder to adhere to a current collector due to its larger size, enhancing the battery's capacity and energy density.

A rechargeable lithium battery including the positive electrode active material according to one or more embodiments of the disclosure may have improved low-temperature characteristics. In one or more embodiments, a capacity at about -20 °C compared with an initial capacity of the rechargeable lithium battery (capacity at about -20 °C/initial capacity) may be about 40% or greater. For example, the capacity at about -20 °C compared with the initial capacity (capacity at about -20 °C/initial capacity) of the rechargeable lithium battery, according to one or more embodiments of the disclosure, may be about 80% to about 100%, about 85% to about 100%, or about 90% to about 99%.

A rechargeable lithium battery including the positive electrode active material according to one or more embodiments of the disclosure may have an improved average voltage. In one or more embodiments, the average voltage of the rechargeable lithium battery, according to one or more embodiments of the disclosure, may be about 3.2 V to about 3.5 V. For example, the operating voltage may be from about 3.25 V to about 3.4 V, or from about 3.28 V to about 3.35 V.

A rechargeable lithium battery including the positive electrode active material, according to one or more embodiments of the disclosure, may have improved lifespan characteristics. In one or more embodiments, the rechargeable lithium battery according to one or more embodiments of the disclosure may have a capacity retention rate of at least about 95% after about 50 cycles of charging and discharging with a constant current of about 1.0 C at the above-described voltage (or at a voltage of about 3 V to about 5 V). For example, the capacity retention rate may be about 95% to about 100%, or about 97% to about 100%.

**Preparation Method of Positive Electrode Active Material**

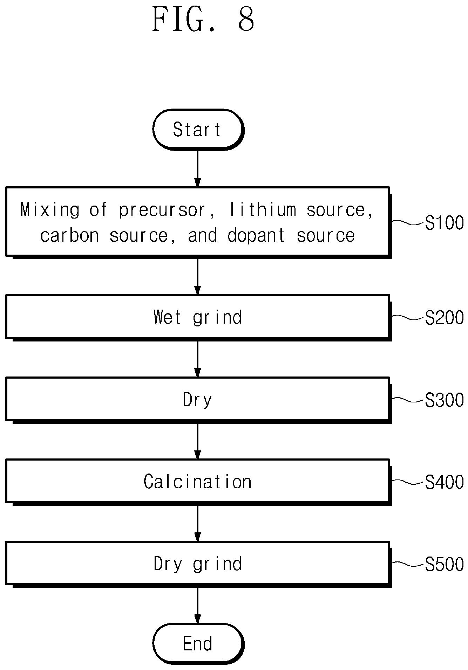

FIG. 8 is a flowchart showing a preparation method of a positive electrode active material according to one or more embodiments of the disclosure. Referring to FIG. 8, preparation of a first particle PTC1 according to one or more embodiments of the disclosure will be described in more detail.

An iron phosphate precursor, a lithium source, a carbon source, and a dopant source may be added to a solvent, and mixed (S100). For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus

(P)-containing compound. For example, the iron phosphate precursor may include $FePO_4 \cdot H_2O$, and/or a (e.g., any suitable) mixture of $FeSO_4$ and $H_3PO_4$. For example, the iron phosphate precursor may include $FePO_4$ and/or a (e.g., any suitable) mixture of $FeSO_4$ and $H_3PO_4$.

The lithium source may include at least one selected from among (e.g., selected from the group consisting of) lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from among (e.g., selected from the group consisting of) glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one of a Mn-containing oxide or a Mn-containing chloride, and at least one of a Ti-containing oxide or a Ti-containing chloride to provide the Mn and Ti in Formula 1 above. For example, the dopant source may include at least one of the Mn-containing oxide or the Mn-containing chloride, and at least one of the Ti-containing oxide or the Ti-containing chloride.

Wet grinding may be performed on the mixture (S200). For the wet grinding, a general wet mill capable of temperature control may be used. In particular, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the disclosure, the wet grinding (S200) may not be provided. For example, in order to maximize or increase the average particle diameter of the first particle PTC1 to be finally prepared, the wet grinding (S200) of precursor particles may not be provided.

The solvent may be removed from the mixture to form a dried mixture (S300).

If (e.g., when) preparing the first particle PTC1 shown in FIG. 6 (e.g., in the form of single particles), according to one or more embodiments of the disclosure, the forming of the dried mixture may include performing direct evaporation on the mixture. For example, the direct evaporation may include static drying or spray drying.

If (e.g., when) preparing the first particle PTC1 shown in FIG. 7 (e.g., in the form of secondary particles), according to one or more embodiments of the disclosure, the forming of the dried mixture may include performing the spray drying on the mixture. Any suitable (e.g., generally used) spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet-grinding process, may be aggregated (e.g., agglomerated) with each other through the spray-drying process to thereby form a secondary particle. Therefore, by adjusting the flow amount and flow rate of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (e.g., amount) (TSC) of about 20% to about 40%. The total solid content (e.g., amount) may refer to a converted percentage value of the weight of a solid material remaining after solvent evaporation (that is, dried mixture) with respect to the total weight of the mixture prior to drying (that is, spray liquid). For example, the spray liquid may have a total solid content (e.g., amount) of about 30 wt%.

If (e.g., when) the total solid content (e.g., amount) is less than about 20%, an average particle diameter of the first particle PTC1 may decrease undesirably and productivity may be reduced. If (e.g., when) the total solid content (e.g., amount) is greater than about 40%, adjusting the average particle diameter of the first particle PTC1 may become difficult, and size difference (e.g., non-uniformity) between the first particles PTC1 may increase.

The spray liquid according to this embodiment may have a viscosity of about 1500 mPa·s to about 2500 mPa·s with the above-mentioned total solid content (e.g., amount). For example, the spray liquid may have a viscosity of about 2000 mPa·s.

In one or more embodiments, an input rate for spray drying may be about 0.1 kg/min to about 0.9 kg/min. The input rate for spray drying may be defined as the weight of the solids in the spray liquid added per minute. For example, if about 1 kg of the spray liquid, having a total solid content (e.g., amount) of about 20%, is added per one minute, the input rate may be about 0.2 kg/min. In one or more embodiments, the input rate for spray drying may be about 0.5 kg/min.

In one or more embodiments, the spray drying may be performed at a temperature of about 100 °C to about 300 °C. For example, the spray drying may be performed at a temperature of about 200 °C to about 300 °C, at a temperature higher than about 200 °C and lower than or equal to about 300 °C, or at a temperature of about 230 °C to about 270 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, the input pressure of the spray liquid may be about 0.5 MPa.

If (e.g., when) the input rate, the input pressure, and the temperature for the spray drying fall within the above-described ranges, respectively, the first particle PTC1 may have a sphere shape and a desired or suitable porosity.

The spray liquid for the spray drying may have a flow rate of about 30 mL/min to about 80 mL/min. If (e.g., when) the flow rate is less than about 30 mL/min, it may lead to nozzle clogging, reduced productivity, and/or the like. If (e.g., when) the flow rate is greater than about 80 mL/min, due to moisture condensation in the spray-drying device, the mixture may not be dried completely. The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time (e.g., the duration) of the calcination process may be about 4 hours to about 20 hours, or about 6 hours to about 12 hours. As the dried mixture is calcined, the first particle PTC1 containing the compound represented by Formula 1, may be formed.

Dry grinding may be performed on the calcined first particle PTC1 (S500). The calcined mixture may be ground using an air jet mill, and/or the like.

In preparation of the first particle PTC1 shown in FIG. 6 (e.g., in the form of single particles), according to one or more embodiments of the disclosure, the calcined mixture may be ground at a rotation speed of at least about 7000 rpm. For example, the calcined mixture may be ground at a rotation speed of about 7000 rpm to about 10000 rpm, or about 7500 rpm to about 9000 rpm. Accordingly, the first particle PTC1 may have a form of a single particle as illustrated in FIG. 6.

In preparation of the first particle PTC1 shown in FIG. 7 (e.g., in the form of secondary particles), according to one or more embodiments of the disclosure, the calcined mixture may be ground at a rotation speed of about 0 rpm to about 7000 rpm. For example, the calcined mixture may be ground at a rotation speed of about 4000 rpm to about 7000 rpm, about 4000 rpm to about 6000 rpm, or about 4500 rpm to about 5000 rpm. Unlike the preparation of the positive electrode active material shown in FIG. 6, the grinding after calcination (S500) may be performed under relatively mild conditions. In the preparation of the positive electrode active material shown in FIG. 7, for example, the dry grinding (S500) may also not be provided. If (e.g., when) the rotation speed in the grinding (S500) falls within the above-mentioned ranges, the first particle PTC1 may be maintained to have a form of a secondary particle. Accordingly, the first particle PTC1 may have a form of the secondary particle as illustrated in FIG. 7.

In preparation of the first particle PTC1 according to the process shown in FIG. 8, according to one or more embodiments of the disclosure, a carbon source may be introduced to an iron phosphate precursor to form a carbon coating layer uniformly (e.g., substantially uniformly) on surfaces of primary particles. Thereafter, the primary particles may be (e.g., closely) aggregated (e.g., agglomerated), through the spray drying, to form a dense sphere-shaped secondary particle. As a result, the first particle PTC1 may include the stable carbon coating layer in both the outside and the inside of the first particle PTC1, and may thus have a relatively high carbon content (e.g., amount). That is, the first particle PTC1 may (be in a secondary particle form and) include the stable carbon coating layer both on the outer surface of the secondary particle and on the surface of the primary particles, which forms the inside of the secondary particle of the first particle PTC1. Due to the high carbon content (e.g., amount) of the first particle PTC1, the positive electrode active material layer AML1 may have improved conductivity.

Analysis on a carbon element according to one or more embodiments of the disclosure may be performed using an Elementar Micro Cube elemental analyzer. The operation method and conditions are as follows. A sample of 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide may be detected using a thermal conductivity detector (TCD).

Scanning electron microscope-energy dispersive X-ray spectroscopy (SEM-EDS) and quantitative analyses on a particle surface may be conducted to measure the carbon content (e.g., amount) according to one or more embodiments of the disclosure. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, the disclosure will be described in more detail with reference to examples. However, the following examples are merely presented as examples of the disclosure, and the scope of the disclosure is not limited thereto.

**Example 1: Preparation of First Particle in Form of Single Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4 \cdot H_2O$), and titanium dioxide were mixed in a molar ratio of about 0.8496:1.03:0.15:0.004. 10 wt% of glucose was further added to the mixture. Wet grinding was performed on the mixture by ball milling. The mixture was first dried by evaporation on a tray through heating, and then dried in a vacuum oven at about 85 °C for about 4 hours. The dried mixture was calcined in a nitrogen atmosphere at about 650 °C for about 10 hours. The calcined product was ground at a rotation speed of about 8000 rpm to obtain a first particle in the form of a single particle. That is, first particles in the form of non-aggregated single particles were obtained. The average size of the first particles was about 300 nm to about 400 nm. The formula of the first particles was $LiFe_{0.8496}Mn_{0.15}Ti_{0.004}PO_4$. The form of the prepared particles, and the number of moles of doped Mn and the number of moles of doped Ti are listed in Table 1.

**Example 2: Preparation of First Particle in Form of Secondary Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4.H_2O$), and titanium dioxide were mixed in a molar ratio of about 0.8496:1.03:0.15:0.004. 10 wt% of glucose was further added to the mixture. The slurry mixture was first dried by evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle. That is, first particles in the form of secondary particles were obtained, and the secondary particles include an aggregation of a plurality of primary particles. The average size of the second particles was about 100 nm to about 200 nm. The formula of the first particles was $LiFe_{0.8496}Mn_{0.15}Ti_{0.004}PO_4$. The form of the prepared particles, and the number of moles of doped Mn and the number of moles of doped Ti are listed in Table 1.

**Example 3: Preparation of First Particle in Form of Secondary Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4.H_2O$), and titanium dioxide were mixed in a molar ratio of about 0.7996:1.03:0.2:0.004. The first particle was prepared in substantially the same manner as that of Example 2 except that the formula of the first particle was $LiFe_{0.7996}Mn_{0.20}Ti_{0.004}PO_4$. The form of the prepared particle and the number of moles of doped Mn and the number of moles of doped Ti are listed in Table 1.

**Example 4: Preparation of First Particle in Form of Secondary Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4 \cdot H_2O$), and titanium dioxide were mixed in a molar ratio of about 0.8996:1.03:0.1:0.004. The first particle was prepared in substantially the same manner as that of Example 2 except that the formula of the first particle was $LiFe_{0.8996}Mn_{0.10}Ti_{0.004}PO_4$. The form of the prepared particle and the number of moles of doped Mn and the number of moles of doped Ti are listed in Table 1.

**Comparative Example 1: Preparation of First Particle in Form of Single Particle**

An iron phosphate precursor ($Fe_1PO_4 \cdot H_2O$) (or $FePO_4 \cdot H_2O$) and lithium carbonate were mixed in a molar ratio of about 1:1.03, and the first particle was prepared in substantially the same manner as that of Example 1 except that the formula of the first particle was $LiFePO_4$. The form of the prepared particle and the number of moles of doped Mn and the number of moles of doped Ti are listed in Table 1.

**Comparative Example 2: Preparation of First Particle in Form of Single Particle**

An iron phosphate precursor ($Fe_1PO_4 \cdot H_2O$) (or $FePO_4 \cdot H_2O$), lithium carbonate, and titanium dioxide were mixed in a molar ratio of about 1:1.03:0.004, and the first particle was prepared in substantially the same manner as that of Example 1, except that the formula of the first particle was $LiFe_{0.996}Ti_{0.004}PO_4$. The form of the prepared particle and the number of moles of doped Mn and the number of moles of doped Ti are listed in Table 1.

**Comparative Example 3: Preparation of First Particle in Form of Single Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4.H_2O$), and titanium dioxide were mixed in a molar ratio of about 0.9496:1.03:0.05:0.004. The first particle was prepared in substantially the same manner as that of Example 1 except that the formula of the first particle was $LiFe_{0.9496}Mn_{0.05}Ti_{0.004}PO_4$. The form of the prepared particle and the number of moles of doped Mn and the number of moles of doped Ti are listed in Table 1.

**Comparative Example 4: Preparation of First Particle in Form of Single Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4.H_2O$), and titanium dioxide were mixed in a molar ratio of about 0.6996:1.03:0.3:0.004. The first particle was prepared in substantially the same manner as that of Example 1 except that the formula of the first particle was $LiFe_{0.6996}Mn_{0.3}Ti_{0.004}PO_4$. The form of the prepared particle and the number of moles of doped Mn and the number of moles of doped Ti are listed in Table 1.

**Comparative Example 5: Preparation of First Particle in Form of Secondary Particle**

An iron phosphate precursor ($Fe_1PO_4 \cdot H_2O$) (or $FePO_4 \cdot H_2O$), lithium carbonate, and titanium dioxide were mixed in a molar ratio of about 1:1.03:0.004, and the first particle was prepared in substantially the same manner as that of Example 2, except that the formula of the first particle was $LiFe_{0.996}Ti_{0.004}PO_4$. The form of the prepared particle and the number of moles of doped Mn and the number of moles of doped Ti are listed in Table 1.

**Comparative Example 6: Preparation of First Particle in Form of Secondary Particle**

An iron phosphate precursor ($Fe_1PO_4 \cdot H_2O$) (or $FePO_4 \cdot H_2O$), lithium carbonate, $Mn_1PO_4 \cdot H_2O$ (or $MnPO_4.H_2O$), and titanium dioxide were mixed in a molar ratio of about 0.6996:1.03:0.3:0.004. The first particle was prepared in substantially the same manner as that of Example 2 except that the formula of the first particle was $LiFe_{0.6996}Mn_{0.3}Ti_{0.004}PO_4$. The form of the prepared particle and the number of moles of doped Mn and the number of moles of doped Ti are listed in Table 1.

**Preparation of Positive Electrode**

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminium current collector and dried, and then rolling was performed to prepare a positive electrode.

**Manufacture of Rechargeable Lithium Battery**

The prepared positive electrode and a lithium metal counter electrode, as a counter electrode, were used to prepare a 2032-type (kind) coin half-cell. A separator (thickness: about 16 $\mu$m) formed of a porous polyethylene (PE) film was interposed between the positive electrode and the lithium metal counter electrode, and an electrolyte solution was introduced to manufacture a rechargeable lithium battery. The electrolyte was obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3.

Table 1

| Classification | Form | Doped Ti (mol%) | Doped Mn (mol%) |
|---|---|---|---|
| Example 1 | Single particle | 0.4 | 15 |
| Example 2 | Secondary particle | 0.4 | 15 |
| Example 3 | Secondary particle | 0.4 | 20 |
| Example 4 | Secondary particle | 0.4 | 10 |
| Comparative Example 1 | Single particle | 0 | 0 |
| Comparative Example 2 | Single particle | 0.4 | 0 |
| Comparative Example 3 | Single particle | 0.4 | 5 |
| Comparative Example 4 | Single particle | 0.4 | 30 |
| Comparative Example 5 | Secondary particle | 0.4 | 0 |
| Comparative Example 6 | Secondary particle | 0.4 | 30 |

**Evaluation Example 1: Surface Analysis of Positive Electrode Active Material**

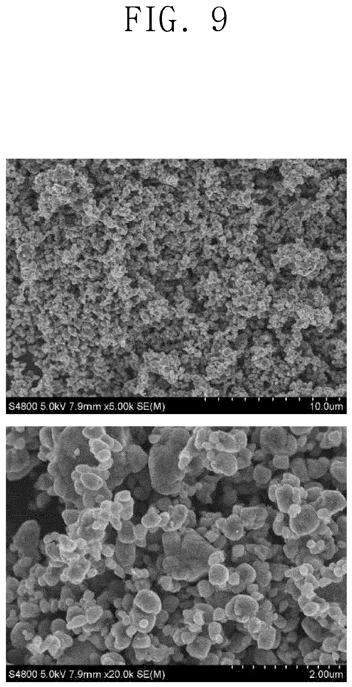

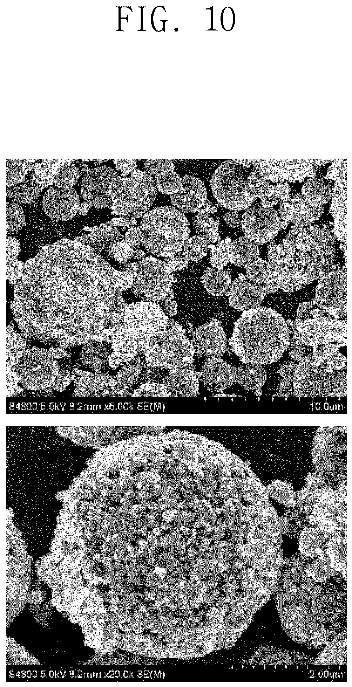

FIG. 9 shows a scanning electron microscope (SEM) image of the first particle prepared according to Example 1. FIG. 10 shows an SEM image of the first particle prepared according to Example 2. Referring to FIG. 9, it can be seen that the first particle according to Example 1 of the disclosure has a form of a fine single particle (e.g., remain as individual primary particles). Referring to FIG. 10, it can be seen that the first particle according to Example 2 of the disclosure has a form of a spherical-shaped secondary particle in which a plurality of primary particles are aggregated (e.g., agglomerated). It can be seen that the second particle PTC2 (e.g., primary particle PTC2) according to Example 2 of the disclosure has a form of a fine nano-sized primary particle. Referring to FIGS. 9 and 10, the primary particle PTC2 according to Example 2 was smaller than the primary particle according to Example 1, and was substantially uniform in size.

**Evaluation Example 2: Evaluation on Active Material**

The pellet densities (PD) and carbon contents of the positive electrode active materials according to Examples 1 to 4 and Comparative Examples 1 to 6 were measured, and the results were listed in Table 2. The average pellet density can be measured by putting 3 g of a positive electrode active material in a pellet mold and applying a force of about 4.0 US tons for about 30 seconds.

Table 2

| Classification | Pellet density (g/cc) | Carbon content (e.g., amount) (wt%) |
|---|---|---|
| Example 1 | 2.37 | 1.52 |
| Example 2 | 2.46 | 1.83 |
| Example 3 | 2.41 | 1.82 |
| Example 4 | 2.43 | 1.81 |
| Comparative Example 1 | 2.40 | 1.50 |
| Comparative Example 2 | 2.41 | 1.47 |
| Comparative Example 3 | 2.40 | 1.52 |
| Comparative Example 4 | 2.35 | 1.57 |
| Comparative Example 5 | 2.5 | 1.82 |
| Comparative Example 6 | 2.40 | 1.81 |

Referring to Table 2, it can be seen that the positive electrode active material according to Example 1 of the disclosure has a carbon content (e.g., amount) that is similar to or higher than that of the positive electrode active materials according to Comparative Examples 1 to 3. In addition, it can be seen that the positive electrode active materials according to Examples 2 to 4 have higher pellet densities, and also have a carbon content (e.g., amount) that is similar to or higher than that of the positive electrode active materials according to Comparative Examples 1 to 6.

**Evaluation Example 3: Evaluation on Battery Characteristics**

Characteristics of rechargeable lithium batteries prepared using the positive electrode active materials according to Examples 1 to 4 and Comparative Examples 1 to 6 were evaluated.

For initial charging and discharging, the rechargeable lithium battery was initially charged under conditions of a constant current (0.2 C) and a constant voltage (4.25 V), was rested for about 10 minutes and then discharged with a constant current (0.2 C) until a voltage reached 3.0 V. Thereafter, the charging and discharging cycle was repeated 50 times at about 45 °C under about 1.0 C/1.0 C conditions. After a new coin cell was manufactured, a charging and discharging cycle was performed under about 0.2 C/0.2 C conditions, and then a capacity at about -20 °C was measured. The results of evaluating the battery characteristics were listed in Table 3.

Table 3

| Classification | Charge amount at 4.3 V (mAh/g) | Discharge amount at 4.3 V (mAh/g) | Efficiency at 4.3 V (%) | Average voltage (V) | Capacity at-20 °C (mAh/g) | Lifespan at 4.3 V, 50 cycles (%) |
|---|---|---|---|---|---|---|
| Example 1 | 155.5 | 147.0 | 94.6 | 3.31 | 85 | 96.2 |
| Example 2 | 157.0 | 151.5 | 96.5 | 3.31 | 103 | 98.5 |
| Example 3 | 156.3 | 150.4 | 96.2 | 3.35 | 106 | 98.2 |
| Example 4 | 157.7 | 152.7 | 96.8 | 3.28 | 95 | 97.9 |
| Comparativ e Example 1 | 164.1 | 156.1 | 95.1 | 3.20 | 43 | 94.3 |
| Comparativ e Example 2 | 164.3 | 156.2 | 95.1 | 3.20 | 58 | 97.2 |

(continued)

| Classification | Charge amount at 4.3 V (mAh/g) | Discharge amount at 4.3 V (mAh/g) | Efficiency at 4.3 V (%) | Average voltage (V) | Capacity at-20 °C (mAh/g) | Lifespan at 4.3 V, 50 cycles (%) |
|---|---|---|---|---|---|---|
| Comparativ e Example 3 | 157.0 | 148.9 | 94.9 | 3.24 | 65 | 94.0 |
| Comparativ e Example 4 | 154.8 | 146.1 | 94.4 | 3.35 | 90 | 95.7 |
| Comparativ e Example 5 | 165.7 | 161.1 | 97.2 | 3.20 | 87 | 97.2 |
| Comparativ e Example 6 | 156.3 | 150.4 | 96.2 | 3.35 | 106 | 98.2 |

Referring to Table 3, it can be seen that the rechargeable batteries according to Examples 1 to 4 of the disclosure have excellent or suitable low-temperature capacities and lifespan characteristics. In particular, it can be seen that the rechargeable battery according to Example 1 of the disclosure has a higher discharge capacity at about -20°C, and has a lifespan similar to or longer than the rechargeable batteries according to Comparative Examples 1 to 3. It can be seen that the rechargeable batteries according to Examples 2 to 4 of the disclosure have discharge capacities at about -20 °C similar to or higher than that of Comparative Examples 5 and 6, and have lifespans similar to or longer than that of the rechargeable batteries according to Comparative Examples 5 and 6.

In one or more embodiments, it can be seen that the rechargeable batteries according to Examples 2 to 4 have higher charge amounts than the rechargeable battery according to Example 1, and therefore, the rechargeable batteries according to Examples 2 to 4 have lower resistance.

A positive electrode active material according to one or more embodiments of the disclosure may have improved mixture density, capacity, and energy density. A rechargeable lithium battery according to one or more embodiments of the disclosure may have a relatively high operating voltage and improved high-voltage lifespan characteristics.

Here, unless otherwise defined, the listing of steps, tasks, or acts in a particular order should not necessarily mean that the invention or claims require that particular order. That is, the general rule that unless the steps, tasks, or acts of a method (e.g., a method claim) actually recite an order, the steps, tasks, or acts should not be construed to require one.

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the disclosure have been described with reference to the accompanying drawings, it is understood that the disclosure should not be limited to these embodiments but one or more suitable changes and modifications can be made within the scope of the claims and equivalents thereof, the detailed description of the disclosure, and the accompanying drawings, all of which also falls within the scope of the disclosure.

**Claims**

1. A positive electrode active material comprising

a first particle, the first particle comprising a compound represented by Formula 1 and having a first average particle diameter:

Formula 1            $Li_aFe_xMn_yTi_zPO_{4-b}$

wherein, in Formula 1, $0.8 \leq a \leq 1.2$, $0.79 \leq x \leq 0.9$, $0.1 \leq y \leq 0.2$, $0.001 \leq z \leq 0.05$, $0 \leq b \leq 0.05$, and $0.99 \leq x + y + z \leq 1.01$.

2. The positive electrode active material as claimed in claim 1, wherein

         y is about 0.12 to about 0.18, and
         z is about 0.003 to about 0.006.

3. The positive electrode active material as claimed in claim 1 or claim 2, wherein

         the first particle comprises a coating layer comprising carbon, and
         carbon in the first particle is about 1.5 wt% to about 2.5 wt% in amount, based on a total 100 wt% of the first particle.

4. The positive electrode active material as claimed in any one of claims 1 to 3, wherein

         the first particle is a single particle, and
         the first average particle diameter is about 500 nm to about 2.5 $\mu$m.

5. The positive electrode active material as claimed in any one of claims 1 to 4, wherein

         the first particle comprises at least one primary particle, and
         an average size of the primary particle is about 100 nm to about 500 nm.

6. The positive electrode active material as claimed in any one of claims 1 to 3, wherein the first particle comprises a plurality of second particles aggregated with each other.

7. The positive electrode active material as claimed in claim 6, wherein the first average particle diameter is about 2 $\mu$m to about 15 $\mu$m.

8. The positive electrode active material as claimed in claim 6 or claim 7, wherein

         each second particle of the plurality of second particles is a primary particle, and
         an average size of the second particles is about 100 nm to about 200 nm.

9. The positive electrode active material as claimed in any one of claims 6 to 8, wherein

         the first particle further comprises a grain boundary coating layer on an interface between the plurality of second particles, and
         the grain boundary coating layer comprises carbon.

10. The positive electrode active material as claimed in any one of claims 6 to 9, wherein the first particle has a porosity of about 20% to about 40%.

11. The positive electrode active material as claimed in any one of claims 6 to 10, wherein a span value, obtained by analysis on the first particle utilizing a particle size analyzer, is about 0.3 to about 0.75.

12. The positive electrode active material as claimed in any one of claims 1 to 11, wherein a pellet density of the positive electrode active material is about 2.0 g/cc to about 2.5 g/cc.

13. A positive electrode for a rechargeable lithium battery comprising:

         a positive electrode current collector; and
         a positive electrode active material layer on the positive electrode current collector,
         wherein the positive electrode active material layer comprises the positive electrode active material as claimed in any one of claims 1 to 12, a conductive material, and a binder.

14. The positive electrode as claimed in claim 13, wherein the binder comprises at least one selected from the group consisting of polyvinyl alcohol, carboxymethyl cellulose, hydroxypropyl cellulose, diacetyl cellulose, polyvinylchloride, carboxylated polyvinylchloride, polyvinyl fluoride, a polymer comprising ethylene oxide, polyvinylpyrrolidone, polyurethane, polytetrafluoroethylene, polyvinylidene fluoride, polyethylene, polypropylene, a styrene-butadiene rubber, a (meth)acrylate styrene-butadiene rubber, an epoxy resin, a (meth)acrylic resin, a polyester resin, and nylon.

15. The positive electrode as claimed in claim 13 or claim 14, wherein the conductive material comprises a carbon-based material; a metal-based material in a form of a metal powder or a metal fiber; a conductive polymer; or a mixture thereof.

# FIG. 1

# FIG. 2

EP 4 641 689 A1

# FIG. 3

# FIG. 4

# FIG. 5

# FIG. 6

# FIG. 7

# FIG. 8

```
        ┌─────────────┐
        │    Start     │
        └──────┬──────┘
               │
               ▼
┌──────────────────────────────────────┐
│ Mixing of precursor, lithium source, │ ──S100
│   carbon source, and dopant source   │
└──────────────────┬───────────────────┘
                   │
                   ▼
┌──────────────────────────────────────┐
│              Wet grind               │ ──S200
└──────────────────┬───────────────────┘
                   │
                   ▼
┌──────────────────────────────────────┐
│                Dry                   │ ──S300
└──────────────────┬───────────────────┘
                   │
                   ▼
┌──────────────────────────────────────┐
│             Calcination              │ ──S400
└──────────────────┬───────────────────┘
                   │
                   ▼
┌──────────────────────────────────────┐
│             Dry grind                │ ──S500
└──────────────────┬───────────────────┘
                   │
                   ▼
           ┌─────────────┐
           │     End      │
           └─────────────┘
```

FIG. 9

# FIG. 10

Europäisches Patentamt
European Patent Office
Office européen des brevets

# EUROPEAN SEARCH REPORT

**Application Number**

EP 25 16 7976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 259 736 A (NINGDE CONTEMPORARY AMPEREX TECH CO LTD ET AL.) 13 June 2023 (2023-06-13) * paragraphs [0162], [0182]; claims 1-18; figures 2-4 * | 1-15 | INV. H01M4/58 H01M4/525 H01M4/505 H01M4/136 H01M4/62 |
| A | CN 115 810 719 A (NINGDE CONTEMPORARY AMPEREX TECH CO LTD) 17 March 2023 (2023-03-17) * see US2025070160A1 * & US 2025/070160 A1 (DING YOUCAI [CN] ET AL) 27 February 2025 (2025-02-27) * claims 1-20 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 11 September 2025 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7976

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | | Publication date | Patent family member(s) | | Publication date |
|---|---|---|---|---|---|
| CN 116259736 | A | 13-06-2023 | CN | 116259736 A | 13-06-2023 |
| | | | CN | 118969975 A | 15-11-2024 |
| | | | WO | 2024234544 A1 | 21-11-2024 |
| CN 115810719 | A | 17-03-2023 | CN | 115810719 A | 17-03-2023 |
| | | | EP | 4507024 A1 | 12-02-2025 |
| | | | US | 2025070160 A1 | 27-02-2025 |
| | | | WO | 2024093458 A1 | 10-05-2024 |

EPO FORM P0459

For more details about this annex : see Official Journal of the European Patent Office, No. 12/82